# FASCICULE DE BREVET EUROPEEN

(11) **EP 1 426 586 B1**
(45) Date de publication et mention de la délivrance du brevet: **25.10.2006**
(21) Numéro de dépôt: 03358017.6
(22) Date de dépôt: 04.11.2003
(51) Int. Cl.: F02C 3/28, C10J 3/20, C10J 3/44, F02C 6/00, F02C 3/22

(54) **Turbo-moteur avec gazogène de gaz de bois**
Turbomotor mit Holzgasgenerator
Turbo-engine with wood gas generator

(30) Priorité: 21.11.2002 FR 0214562
(43) Date de publication de la demande: 09.06.2004
(73) Titulaire: Bech, Jean André, F-13007 Marseille (FR)
(72) Inventeur: Bech, Jean André, F-13007 Marseille (FR)

(56) Documents cités:
- DE-A- 4 003 210
- DE-A- 10 057 276
- DE-A- 19 709 383
- FR-A- 790 395
- FR-A- 1 126 906
- FR-A- 1 331 082
- FR-A- 2 502 637
- US-B1- 6 463 741

## Description

La présente invention a pour objet la production d'énergie par un turbo-moteur thermique, spécialement adapté pour fonctionner associé à un gazogène à bois, afin de réduire dans de très larges proportions sa consommation en combustible d'origine pétrolière, laquelle devient de ce fait occasionnelle, limitée au démarrage et, en appoint, en cas d'insuffisance momentanée du gazogène.

Le secteur technique de l'invention est celui des générateurs de courant électrique utilisant des sources d'énergie naturelles renouvelables, notamment celles de la bio-masse végétale.

Les applications visées sont celles consistant à produire économiquement de l'électricité d'une manière autonome en des lieux isolés. Par exemple: Exploitations agricoles et/ou forestières; en ce dernier cas, au moyen d'un tel générateur porté par un véhicule spécial « tous terrains », permettant des travaux forestiers au moyen d'outils de coupe électriques (tronçonneuses, débroussailleuses, broyeurs) en utilisant le combustible gratuit et indéfiniment disponible qu'est le bois coupé sur place.

L'utilisation du gaz produit par un gazogène comme carburant de remplacement est bien connue par ses nombreuses applications durant la seconde guerre mondiale: Mais seulement pour des moteurs thermiques à pistons, à carburateur et allumage électrique, pour véhicules automobiles notamment.

En l'état actuel de la technique, excepté les applications industrielles où des turbines à gaz ont été alimentées par des gaz de hauts-fourneaux ou autres gaz chauds issus de raffineries, combustibles ou non, il ne semble pas exister de turbines à gaz alimentées par un gazogène, à bois ou charbon de bois. Une turbine gaz utilisant du combustible bio-masse est connue du document DE-A-10057 276.

Concernant les gazogènes à bois, on connaît de très nombreuses variantes de construction visant à améliorer la qualité énergétique du gaz-combustible produit, ainsi que leur rendement thermique, notamment par adjonction d'une double-paroi isolante avec circulation de l'air admis pour récupérer de la chaleur. D'autres se distinguent par leur combinaison avec un système de suralimentation par turbo-compresseur pour moteur à pistons, mais non avec une turbine à gaz remplaçant ce moteur.

Les turbo-moteurs existants utilisent quasi-exclusivement des combustibles pétroliers, liquides ou gazeux tels que fioul, kérosène ou gaz de pétrole, injectés et brûlés à l'intérieur de la machine, improprement assimilée de ce fait à un «moteur à combustion interne ». A l'exception toutefois de turbine à gaz dite «en circuit-fermé», indiscutablement « à combustion externe » étant apparentée à la machine-à-vapeur en ce qu'elle comporte une «chaudière extérieure» dotée de sa propre chambre de combustion et où est chauffé le fluide caloporteur pré-comprimé: Air, hydrogène ou hélium.

Le turbo-moteur selon la présente Invention, bien qu'étant du type «à air-atmosphérique en circuit-ouvert» s'en rapproche du fait qu'il utilise aussi une source de chaleur extérieure qui est son gazogène associé, l'innovation et son caractère inventif résidant en cette association inédite.

Du point de vue «écologique» ce moteur thermique demeure, hélas, un émetteur de gaz carbonique (CO2) et d'oxyde d'azote (NO2) dans l'atmosphère, par son échappement. Mais une turbine à gaz est toujours beaucoup moins polluante, à puissance égale, qu'un moteur alternatif à pistons, du fait que la combustion y est continue avec un très important excès d'air: De sorte que ses gaz échappement sont considérablement dilués et, en tous cas, exempts d'oxyde de carbone, carbone imbrûlé et oxydes d'azote instables (dits NOx, réputés cancérigènes). Quand au CO2 émis, il faut remarquer qu'il provient majoritairement ici de la combustion de BOIS, au lieu de celle d'un hydrocarbure d'origine pétrolière: C'est à dire, d'un combustible «contemporain» et non d'un «fossile».
Or, tout CO2 «contemporain» est dans le cycle actuel d'absorption quotidienne par la photosynthèse naturelle: Que ce bois soit brûlé ou non, dans cette machine ou ailleurs, voire décomposé, la même masse de CO2 s'en dégage finalement dans l'atmosphère. Le CO2 issu de l'emploi d'un gazogène est donc plus «tolérable» que celui émis par combustion d'hydrocarbures, aujourd'hui excédentaire du fait qu'il aurait dû être absorbé par cette photosynthèse il y a des millions d'années... ou jamais !

Ce procédé est donc d'un grand intérêt actuel, tant par l'économie réalisable en produit pétrolier que par la nature et la relativement faible masse de ses rejets à l'atmosphère lorsqu'il utilise son gazogène.

Car ce turbo-moteur a la particularité de pouvoir fonctionner:
- Selon la conception initiale de la machine: **Avec** son combustible pétrolier usuel,
- Selon l'Invention: **Avec ou sans** ce combustible pétrolier, en utilisant le gaz-combustible produit par son gazogène à bois associé et, de plus, un **apport de chaleur extérieur** provenant de la combustion de ce bois, introduit dans son cycle thermodynamique.

Cet apport est le cumul d'une chaleur récupérée dans le générateur avec celle emportée par le gaz-combustible produit: Car contrairement aux moteurs volumétriques à explosions, un tel turbo-moteur tolère l'admission directe de ce gaz-combustible, en son état **brut** et à haute-température.

Pour opérer cette récupération dans l'appareil, il faut y incorporer un échangeur de chaleur avec l'air travaillant et adopter une disposition particulière pour réduire les déperditions externes.

Ces aménagements différencient ce gazogène de ceux pour véhicules précédemment évoqués et où il fallait obligatoirement refroidir et épurer le gaz-combustible produit pour qu'il soit utilisable par leur moteur à explosions: De sorte que sa chaleur était perdue, dissipée dans l'atmosphère.

Le principe de fonctionnement et les réactions de formation du gaz y demeurent exactement les mêmes, à condition toutefois que le prélèvement de chaleur autour du foyer ne conduise pas à un refroidissement excessif, ainsi qu'expliqué plus loin.

Pour utiliser directement le gaz-combustible produit à haute-température, il faut aussi disposer d'un compresseur capable, à ces températures élevées, de l'aspirer à la pression atmosphérique (sous laquelle il est produit) et de le refouler à une pression nettement supérieure à celle régnant dans la chambre de combustion de la machine, afin de pouvoir l'y injecter. Or ce gaz est beaucoup trop chaud pour un compresseur volumétrique à piston, à lobes ou à palettes, dont la lubrification interne serait aléatoire: Seul convient un compresseur centrifuge construit en métaux résistant à cette forte chaleur.

Avec un turbo-moteur du type «à 2 étages de détente» avec « réchauffe » entre ces 2 derniers étages dans une «chambre de combustion secondaire », le gaz de gazogène peut n'être utilisé que pour cette «réchauffe», l'alimentation normale en combustible pétrolier des brûleurs de la «chambre de combustion principale» étant conservée. Mais il est possible de limiter, voire d'éviter complètement, cette consommation résiduelle de «combustible fossile» en substituant à ce moyen de chauffe du flux d'air travaillant en cette «chambre de combustion principale», **une récupération équivalente de chaleur dans le gazogène:** D'abord au moyen de l'échangeur incorporé cité précédemment (placé dans le courant des gaz chauds sortant du foyer et parcouru intérieurement par le flux d'air travaillant dans la turbine), puis par la mise de l'ensemble du générateur sous double-enveloppe (pour éviter les déperditions) avec des tubes échangeurs parcourus intérieurement par ces gaz chauds et permettant:
- L'étuvage du bois dans la cuve, pour parfaire sa dessiccation avant d'entrer en combustion;
- Le préchauffage de l'air alimentant le foyer.

De sorte qu'un maximum de chaleur est ainsi confiné et retenu dans le gazogène, afin de compenser le prélèvement de chaleur opéré autour du foyer et sur les gaz qui en sortent. Ainsi est évité un refroidissement du gazogène qui pourrait causer son extinction, les réactions de réduction de la vapeur d'eau par le carbone (produisant CO + H2), puis de l'oxyde de carbone (CO) et, finalement, celle du gaz-carbonique (CO2) par la vapeur d'eau donnant 2 CO, étant endothermiques.

**Le turbo-moteur peut-être d'un modèle existant**, doté d'un réducteur de vitesse approprié pour l'entraînement d'un générateur électrique, mais à condition qu'il soit possible de le transformer de telle sorte qu'on puisse en faire sortir le flux d'air travaillant pour le dériver vers cet échangeur de chaleur spécial placé autour du foyer du gazogène, puis l'y faire revenir (surchauffé) à l'entrée du 1^{er} étage de détente en turbine: A moins de se contenter de l'économie de combustible pétrolier réalisable par la «réchauffe» au moyen du gaz-combustible fourni par le gazogène.

**A défaut et/ou pour de plus faibles puissances,** la présente Invention concerne une mini-turbine à gaz originale, construite à partir de turbo-compresseurs de suralimentation existants: Ce turbo-moteur utilise le Réducteur de vitesse selon le Brevet N°91440030.4 du même auteur, en tant que composant mécanique intermédiaire indispensable pour entraîner à 3000 t/mn un alternateur débitant du courant à 50 hertz ou à 3.600 t/mn pour 60 hertz, son combustible normal étant du **GPL** et pour des puissances de 5 à 15 kW, valeurs non-limitatives, des versions beaucoup plus puissantes étant réalisables.

Son architecture autorise la dérivation du flux d'air travaillant, avant son entrée dans sa chambre de combustion principale, vers cet échangeur de chaleur externe situé à proximité, dans le gazogène, pour en revenir surchauffé à la turbine et y fournir le travail mécanique attendu: En ce cas, sans apport de chaleur par les brûleurs de la machine, ou avec un apport moindre.

Cette aptitude à passer du fonctionnement avec son combustible pétrolier normal à celui au gaz de gazogène (ou réciproquement) confère à la machine une grande souplesse et commodité d'utilisation: Car non-seulement toute insuffisance momentanée du gazogène est ainsi compensée, mais l'arrêt du groupe après consommation d'une charge de bois peut-être évité, laissant tout le temps nécessaire pour évacuer les scories, recharger la cuve et rallumer le foyer.

Un tel groupe électrogène « bi-combustible » peut donc fonctionner sans interruptions grâce à ce « relais» éventuel par son alimentation en combustible pétrolier normal, conservée et mise en oeuvre par une régulation automatique contrôlant les principaux paramètres de marche de la machine. De même, le débit en gaz de gazogène est réglé par une vanne-papillon (incorporée au compresseur précédemment évoqué qui l'injecte dans la machine) dont l'ouverture est commandée par un système asservi à ces paramètres de marche: Par exemple, à son régime de rotation, à la température de l'air travaillant ou à sa pression, réglage de débit d'où découle le régime de marche du gazogène.
Ce gaz brut et chaud (entre 600 et 900°C) contient des poussières, de la vapeur d'eau, des goudrons et autres produits volatils plus ou moins combustibles. Les plus grosses particules sont retenues par un filtre dynamique à « cyclone » incorporé dans le conduit d'aspiration dudit compresseur , les brûleurs de ce gaz de gazogène étant conçus pour s'accommoder des plus fines, qui sont finalement brûlées.
La vapeur d'eau n'est pas gênante pour une turbine. Quand aux goudrons et autres produits volatils, ils sont à l'état gazeux à l'entrée des brûleurs et le demeurent forcément lors de leur passage dans la « chambre de combustion secondaire » où ils ne peuvent que brûler, mélangés à la flamme. Tout au plus est à craindre une condensation de leurs produits de combustion sur les surfaces beaucoup plus froides du récupérateur, affectant son efficacité: Il doit donc être aisément visitable et nettoyable.

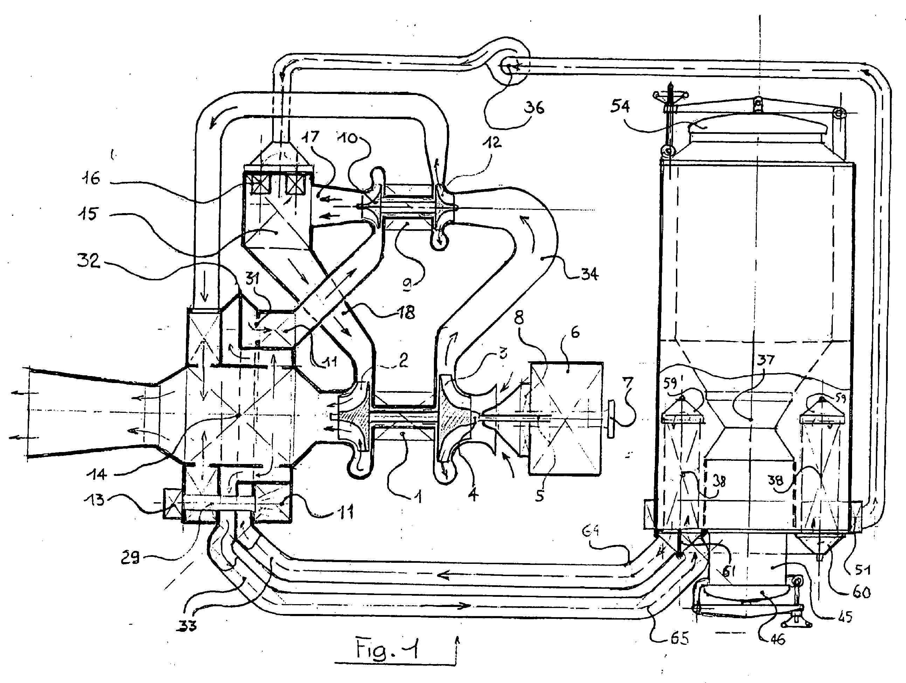

**La Figure 1 est le schéma de principe du procédé**, illustrant l'installation dans son ensemble, les repères qui y désignent les différents composants étant ceux des descriptions ci-après du turbo-moteur et de son générateur de gaz associé.

DESCRIPTION DE CE MINI-TURBO-GENERATEUR ORIGINAL, selon les Figures 2, 3 et 4:
**La Figure 2 représente sa disposition générale,** vue du coté compresseur 2^{ème} étage et montre l'agencement la Chambre de combustion principale (**11**) par une demi-coupe passant par l'axe d'un brûleur de GPL (**29**) et des 2 conduits d'Air (**33**) qui relient la chambre annulaire (**32**) au gazogène.
**La Figure 3 est une demi-coupe partielle** par l'axe d'un des trous (**31**) de passage d'air allant à cette Chambre de combustion (**11**), percés en alternance avec ceux recevant les précédents brûleurs (**29**) et montrant le même agencement, mais en partie supérieure.
**La Figure 4 est une coupe transversale par l'axe du Turbo-Libre** (**9**), vue suivant «f» avec 2 orientations possibles des 2 conduits (**33**).

Les composants principaux de la machine sont 2 turbo-compresseurs de taille différente: Un «gros» et un plus «petit » (en proportion aussi voisine que possible du rapport des volumes spécifiques du fluide en l'état où il traverse chacun) choisis parmi des modèles existants (normalement destinés à la suralimentation de moteurs à combustion interne) selon les caractéristiques de leur compresseur:
- Capacité en Débit d'air aspiré et Rapport de compression pour un débit d'air donné,
- Rendement et Régime de rotation aux divers points de fonctionnement.

Il s'agit de petites machines de très grande diffusion, donc relativement peu coûteuses, constituées d'un compresseur centrifuge mû par une turbine à écoulement radial centripète, au moyen d'un arbre commun sur 2 paliers lubrifiés par une circulation d'huile extérieure.

Le «gros» est le «TURBO-PRINCIPAL» (**1**): Sa turbine est la « turbine de puissance» (**2**) de la machine et son compresseur (**3**), aspirant à l'atmosphère est le 1^{er} étage de compression (ou BP).

Son «nez» (**4**) (l'écrou de blocage de ce rouet-compresseur) est la prise de mouvement où s'adapte l'extrémité de l'arbre (**5**) d'entrée (primaire) du Réducteur de vitesse (**6**) qui entraîne l'**alternateur.**

Il s'agit du « Réducteur de vitesse à roues de friction à double train épicycloïdal » objet du Brevet BECH N°91440030.4, construit ici pour un rapport de réduction de 15,33/1:

A l'intérieur de cet appareil (**6**), son arbre de sortie (secondaire) (**7**) entraîne la pompe à huile à Engrenage (**8**) qui assure la circulation d'huile sous-pression pour l'ensemble.

L'autre (le plus «petit ») (**9**) est nommé ici « TURBO-LIBRE » du fait qu'il n'est pas mécaniquement assujetti, le rôle de sa turbine, qui est le 1^{er}étage de détente (ou HP) (**10**) des gaz chauds sous-pression issus de la chambre de combustion principale (**11**), étant seulement d'entraîner son propre compresseur (**12**) en tant que 2^{ème}étage de compression (ou HP) en série avec le précédent 1^{er}étage (BP) du «Turbo-principal » par la tubulure (**34**). Son régime de rotation varie en fonction des conditions de température et de pression du fluide travaillant et selon la charge la machine.

Le flux gazeux sortant de cette turbine (**10**) «libre », partiellement détendu après avoir fourni le travail nécessaire au 2^{ème} étage de compression (**12**), est dirigé à l'entrée de la turbine (BP) (**2**) du « Turbo-principal » où il subit sa 2^{ème} et avant dernière détente, qui produit le travail mécanique utile, déduction faite de celui absorbé par son compresseur 1^{er}étage BP (**3**).

Mais aussi sommairement construite, cette machine serait incapable d'un Rendement global satisfaisant, à cause de la relative faiblesse du rendement des rotors de compresseurs centrifuges et turbines centripètes utilisés, de l'ordre de 0,70 à 0,80 au mieux. Avec des roues « axiales » à aubages périphériques, la valeur de 0,85 s'obtient encore pour environ 200 mm de diamètre au minimum: Mais pour la turbine seulement, les compresseurs « axiaux », de bien meilleures performances mais plus volumineux, étant du domaine des gros moteurs d'aéronautique et dérivés industriels de forte puissance. Cependant, vu que la puissance développée par la turbine est toujours supérieure à celle absorbée par le compresseur, le rendement propre de cette dernière a plus d'influence sur le rendement total que celui du compresseur. De ce point de vue, le choix du «turbo-principal» parmi les rares petits modèles existants dotés d'une turbine «axiale à action et à réaction », sera très avantageux.

De toutes manières, pour obtenir un Rendement global suffisamment élevé et justifiant la réalisation, il est indispensable de recourir à deux techniques d'amélioration bien connues qui sont :
- La **«récupération de chaleur »** sur les gaz d'échappement sortant de la turbine (**2**),
- La **« réchauffe»** des gaz entre détentes, entre la sortie de la turbine (**10**) et l'entrée à la turbine (**2**).
La machine est donc complétée par les éléments suivants:
- Un échangeur de chaleur par surfaces (**14**), dit «récupérateur», parcouru d'un coté par les gaz d'échappement cédant leur chaleur résiduelle au flux d'air circulant de l'autre, préchauffé ainsi avant son introduction, par les trous (**31**), dans la chambre de combustion principale (**11**).
- Une chambre de combustion secondaire (**15**) dotée de brûleurs additionnels (**16**), intercalée entre la sortie de gaz (**17**) de la turbine-libre (HP) et l'entrée (**18**) de la turbine-motrice (BP).

Pour être efficace ce «récupérateur» (**14**) doit, non-seulement avoir une surface moyenne d'échange aussi développée que possible, mais de plus, n'opposer qu'un minimum de résistance à la circulation des fluides, qu'il s'agisse du fluide chauffé (l'air allant à la chambre de combustion principale (**11**)) ou du fluide chauffant (les gaz sortant de la turbine BP (**2**)) cette dernière « perte de charge » étant l'ultime détente de ces gaz, mais non-productrice de travail. Il s'agit donc d'un composant très élaboré, ici constitué d'un faisceau de nombreux tubes minces (**19**) en acier inoxydable, parcourus intérieurement par les gaz d'échappement, et extérieurement par l'air à préchauffer en 4 circuits radiaux (**20**). Devant se situer immédiatement à la sortie et dans l'axe de la turbine BP (**2**), la forme cylindrique s'impose pour son intégration au centre de la structure annulaire du restant de la machine; de sorte que la chambre de combustion principale (**11**), également annulaire, entoure le conduit (**21**) cylindrique périphérique de sortie d'air de ce récupérateur (**14**), lequel conduit collecte ainsi toute chaleur qui en serait issue, tendant à diffuser vers le centre de la machine.

L'enveloppe cylindrique extérieure (**22**) et le fond (**23**) de la chambre de combustion principale (**11**) coté turbine BP sont à double-paroi parcourue par une circulation d'air, dans le même but de récupération de chaleur, mais aussi pour la sécurité de l'environnement.

A la partie supérieure de ce «coté fond » se trouve l'orifice (**24**) de sortie des gaz chauds de la chambre de combustion principale (**11**), avec une bride où est boulonné le carter d'entrée de gaz (**25**) de la turbine HP, lequel supporte le restant du «turbo-libre»: Corps de palier (**26**) et compresseur HP (**12**), ce turbo (**9**) étant disposé transversalement au dessus de la turbine (**2**) (axes perpendiculaires).

Encore par sécurité et pour limiter les déperditions de chaleur, ce carter (**25**) d'entrée de gaz de la turbine HP (porté à plus de 600°C en fonctionnement) est enfermé dans une enveloppe étanche (**27**), en acier, également parcourue par une circulation d'air.

La chambre de combustion secondaire (**15**) est réalisée par une construction particulière du conduit à angle-droit reliant la sortie (**17**) de la turbine HP à l'entrée (**18**) de la turbine BP, dotée en sa partie supérieure des brûleurs (**16**) de réchauffage dirigés dans le sens de l'écoulement avec, ici encore, une isolation thermique par double-paroi (**35**) parcourue par le précédent flux de circulation d'air, dirigé de là avec la chaleur récupérée vers les chambres (**28**) de mélange Air/gaz des brûleurs GPL (**29**) de la chambre de combustion principale (**11**).

Le choix du GPL comme combustible s'est imposé ici, du fait qu'il est universellement disponible dans le commerce en bouteilles de 13 kg, identiques à celles de butane à usage domestique, mais avec l'énorme avantage du stockage ce gaz-liquéfié sous la pression de 7,5 bar (0,75 MPa) à 15°C (1,7 bar pour le butane). Car cette relativement forte pression dispense de tout système propulseur pour l'injecter aux brûleurs, vu que la contre-pression à vaincre, au maximum réalisable par ces turbos BP et HP en série, est de l'ordre de 2 à 3 bar. Autre avantage: Il doit emprunter au circuit qu'il parcourt sa chaleur de vaporisation avant d'arriver gazeux aux brûleurs (**29**), ce qui en fait un fluide frigorigène bien venu ici, notamment pour refroidir l'huile de graissage qui draine beaucoup de chaleur à son passage dans les paliers des turbos (**1**) et (**9**). Par contre, le gaz de gazogène a besoin d'un propulseur capable de l'injecter sous une pression convenable aux brûleurs (**16**), en l'occurrence le compresseur rotatif centrifuge mécaniquement ou électriquement entraîné (**36**), construit pour résister à la haute température de ces gaz avec un corps en acier moulé et un rouet de turbine en métal réfractaire prélevés sur un « turbo » de taille adéquate, avec sens de rotation inversé.

Ainsi la machine comporte un **réfrigérant d'huile** à tubes échangeurs qui, en fait, est le réchauffeur de ce gaz combustible par lequel la chaleur empruntée à l'huile est avantageusement réintroduite dans le Cycle thermodynamique. Cet avantage est évidemment perdu en marche au Gazogène, le débit de GPL étant alors réduit sinon annulé. En ce cas, un **radiateur** atmosphérique assure cette fonction au moyen d'un ventilateur électrique commandé par thermostat: Mais étant « hors invention » ces accessoires ne sont pas décrits, ni représentés sur les Figures.

**L'inflammation du gaz-combustible** dans les 2 chambres de combustion est obtenue, en chacune d'elles, au moyen d'une bougie d'allumage (**30**) de moteur à explosions, alimentée en permanence par un système classique à haute tension, non-décrit ici, ni représenté, étant lui-aussi « hors Invention.

Une important particularité de cette machine est le mode de construction employé pour dériver le flux d'air travaillant sortant du « récupérateur » (**14**) vers l'échangeur de chaleur extérieur situé dans le gazogène et l'y faire revenir, surchauffé, dans la Chambre de combustion principale (**11**):
A cet effet, la machine comporte une double chambre annulaire (**32**) assurant avec les 2 conduits (**33**):
- D'une part, la collecte de ce flux à son débouché du 4^{ème} et dernier circuit (**20**) du récupérateur (**14**),
- D'autre part, sa redistribution circulaire, en retour et surchauffé, aux trous (**31**) disposés en couronne de part et d'autre de chaque brûleur GPL**(29)** débitant dans la chambre de combustion principale **(11)**.
**Enfin, la machine dispose d'un moyen de démarrage:** A cet effet, le « turbo-principal » (**1**) peut-être mécaniquement entraîné en rotation rapide par l'intermédiaire du Réducteur de vitesse, alors utilisé à l'inverse, en Multiplicateur, par un moteur électrique débrayable.

Mais on peut aussi lancer la machine au moyen d'un «groupe opérant par insufflation»:
Par exemple, un petit moteur à explosions mono-cylindre à essence avec lanceur manuel, dont l'échappement est raccordé à l'entrée (**24**) du carter (**25**) par un orifice, obturé en marche normale par un clapet spécial: De sorte que la pression de ses gaz d'échappement lance la turbine (**10**) du turbo-libre (**9**), dont le compresseur (**12**) débite aussitôt de l'air sous pression. Mais avec un moteur de faible cylindrée tournant à vide et même à plein régime, l'énergie de ces gaz n'est pas suffisante: Il faut qu'il entraîne en plus un compresseur d'air aspirant à l'atmosphère pour fournir le complément nécessaire et qui exige alors la pleine puissance du moteur. Le mélange de cet air refoulé avec les gaz d'échappement (beaucoup plus chauds qu'à vide) est alors capable de lancer la machine.

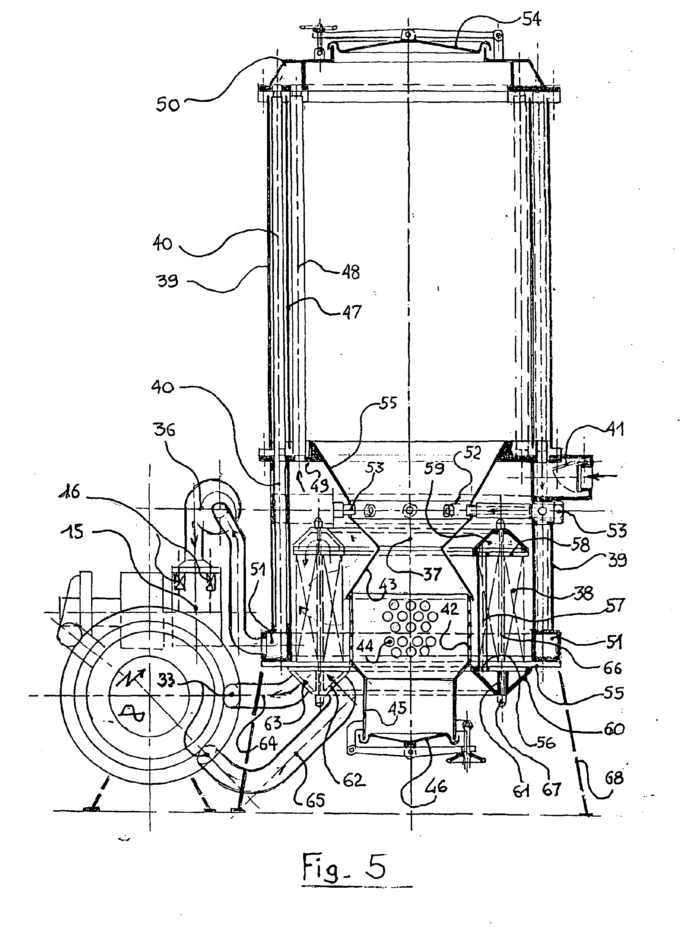

Un procédé similaire consiste à utiliser un compresseur centrifuge à 2 étages « en tandem » (pour délivrer de l'air sous une pression suffisamment forte), entraîné en rotation surmultipliée par un moteur électrique endurant à courant continu. Mais, s'agissant d'accessoires «hors Invention», ces systèmes ne sont pas décrits ici, ni représentés sur les Figures.
DESCRIPTION DU GENERATEUR DE GAZ, selon le dessin annexé, Figure **5** où cet appareil, cylindrique, est représenté en coupe selon un plan passant par son axe vertical, la numérotation de ses éléments prenant la suite de celle des précédentes Figures 1, 2, 3 et 4:

Il s'agit d'un «gazo-bois» du type classique dit «à flamme renversée» (ou «à tirage inversé») dont la partie interne est semblable à celle de diverses réalisations d'antan, d'environ 0,5 m de diamètre sur 2 m de haut, mais modifié extérieurement et autour du foyer, ainsi qu'en ses modes d'assemblage.

Le principal aménagement est à sa base, à la périphérie du foyer (**37**), pour y loger l'échangeur de chaleur Gaz/Air (**38**) parcouru extérieurement par les gaz chauds qui en sortent, et intérieurement par l'air travaillant dans la turbine, sous pression de l'ordre de 2 à 3 bar. De sorte que la partie générant le gaz-combustible demeure sous pression atmosphérique à l'arrêt ou, en fonctionnement, sous celle qui s'y développe par la combustion du bois et sous l'effet de l'aspiration du compresseur (**36**). De plus, l'appareil est ici doté d'une double enveloppe (**39**) destinée à limiter le plus possible les déperditions extérieures de chaleur et dans laquelle s'opère, par l'intermédiaire de tubes échangeurs (**40**) un transfert de chaleur entre les gaz chauds produits et l'air qui s'y trouve, préalablement admis par le clapet-battant (**41**) ouvert à l'atmosphère et qui contrôle le débit d'air de combustion du gazogène. Cette double enveloppe (**39**) réchauffe donc l'air comburant introduit.

Pour éviter le comblement des espaces entre tubes à la base de cet échangeur Gaz/Air (**38**), par les cendres et scories, une chemise cylindrique (**42**) en tôle perforée est placée dans le prolongement du divergent inférieur (**43**) du foyer (**37**) pour les contenir, afin que les gaz, après avoir franchi le magma incandescent et ces résidus, en sortent par ces multiples trous (**44**), puis circulent librement autour des tubes de ce faisceau échangeur (**38**).

Le fond de cet espace est prolongé par un fourreau cylindrique (**45**) qui est le «cendrier», de capacité suffisante pour recevoir la totalité des résidus résultant de la combustion d'une charge de bois, obturé en partie basse par une porte-étanche circulaire (**46**) de même diamètre afin de permettre, à l'arrêt, leur évacuation rapide et totale.

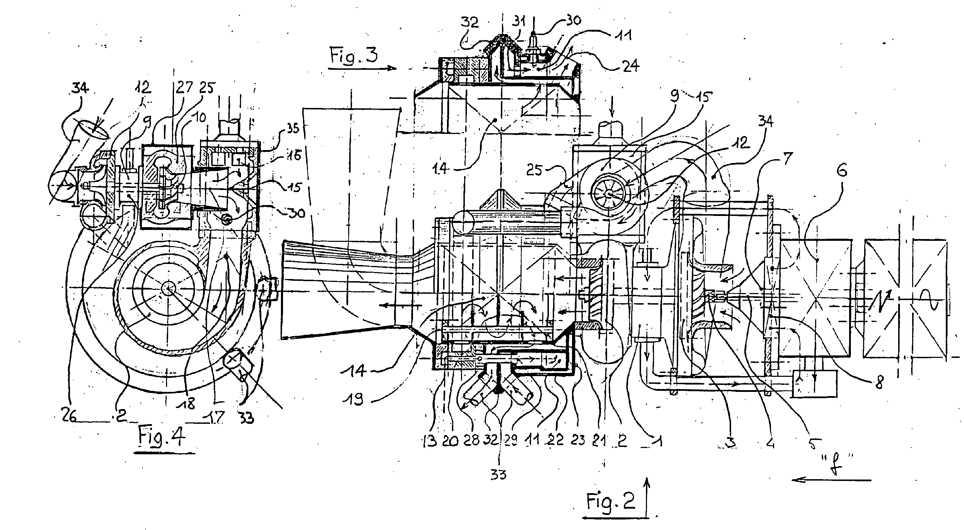

La cuve cylindrique (**47**) contenant la charge de bois est garnie, tout autour de sa périphérie interne, de tubes échangeurs (**48**), disposés selon la génératrice afin de ne gêner en rien la descente par gravité du bois (débité en menus morceaux), avec lequel ils sont extérieurement en contact. Destinés à préchauffer ce bois (étuvage pour parfaire sa dessiccation) ils sont parcourus intérieurement par les gaz chauds produits, collectés en (**49**) au sommet de la chambre inférieure de l'appareil après leur passage autour du faisceau échangeur Gaz/Air (**38**). Repris ensuite en partie supérieure dans un collecteur annulaire (**50**), ces gaz reviennent vers le bas par d'autres tubes (**40**) en nombre égal, enfermés dans la double-enveloppe (**39**) où, au passage, ils préchauffent l'air allant au foyer, puis vont tout à fait en bas de l'appareil dans un 2^{ème}collecteur annulaire (**51**), d'où ils vont au turbo-moteur, aspirés puis comprimés par le compresseur (**36**) pour alimenter les brûleurs de sa Chambre de combustion secondaire ((**16**) et (**15**) des Fig. 2 et 4), selon l'Invention.

Une autre exécution particulière concerne le collecteur torique qui, anciennement, entourait le foyer en portant les tuyères d'injection d'air: Afin de laisser le plus de place possible en hauteur à l'échangeur de chaleur Gaz/Air (**38**) et dégager le passage des gaz après son franchissement, il est remplacé par une couronne (**52**) de beaucoup plus grand diamètre (étant incluse dans la double-Enveloppe (**39**)) et dans laquelle sont vissées les tuyères (**53**) d'entrée d'air au foyer, aisément démontables étant accessibles de l'extérieur. Ainsi, le présent appareil n'a que 2 portes étanches: La porte de chargement supérieure (**54**) et, au plus bas, la porte (**46**) d'évacuation des cendres et scories.

L'appareil est démontable en 3 parties:
- Une partie supérieure comprenant la cuve (**47**) avec ses tubes échangeurs intérieurs (**48**) et ceux (**40**) inclus dans sa propre double-enveloppe (**39**), parcourus par les gaz chauds en retour.
- Une partie inférieure également à double-enveloppe, comprenant la trémie (**55**) et le foyer (**37**), avec la couronne porte-tuyères (**52**)/(**53**) et son clapet battant d'admission (**41**), ainsi qu'à sa base, le collecteur circulaire (**51**) des gaz produits (alimenté par prolongation des tubes (**40**) en double-enveloppe), et fermée par la «plaque de tête» (**55**) du faisceau tubulaire de l'échangeur de chaleur Gaz/Air avec, en son centre, le « cendrier » (**45**) obturé par la porte étanche inférieure (**46**).

En fait, c'est l'échangeur de chaleur Gaz/Air complet (**38**) qui ferme l'appareil en bas, étant construit pour être déposable en un seul bloc. Il est en effet constitué:
- De cette «plaque de tête» inférieure (**55**) en couronne percée d'autant de «logements» (**56**) de tubes (**57**) que nécessaire, disposés en cercles concentriques constituant 2 groupes d'un même nombre de tubes, chacun étant donc une moitié du faisceau complet. L'un de ces 2 groupes de tubes est parcouru par un flux d'Air ascendant, l'autre par le même flux mais descendant.
- Au dessus, d'une autre «plaque de tête» (**58**) en couronne de diamètres intérieur et extérieur appropriés, identiquement percée de «logements» recevant l'autre l'extrémité des tubes (**57**), coiffée d'un couvercle annulaire (**59**), de mêmes diamètres intérieur et extérieur que cette plaque (**58**), et permettant le retour du flux d'Air,
- Du nombre voulu de tubes (**57**), emmanchés en leurs 2 extrémités dans les dits «logements» (**56**),
- D'un couvercle annulaire (**60**) d'entrée/sortie d'Air sous-pression, s'appuyant sur le dessous de la plaque de tête inférieure (**55**), de forme semblable au précédent (**59**), mais un peu plus grand en diamètres du fait qu'il doit comporter, outre une cloison (**61**) de séparation des 2 flux, deux orifices (**62**) et (**63**) d'entrée ou de sortie de chaque coté, de section de passage convenable pour permettre son raccordement aux tuyauteries (**64**) et (**65**) le reliant au turbo-moteur, raccordées aux tubulures (**33**).
- D'une série de tirants (**66**) d'assemblage selon un cercle concentrique intermédiaire moyen. La longueur de ces tirants reliant le tout est celle de l'échangeur, plus celle des 2 filetages dépassant de chaque couvercle et recevant chacun un écrou-borgne de serrage (**67**).

Les tubes (**57**) sont en acier, de dimensions et en nombre convenant pour l'obtention de la surface voulue pour un échange de chaleur optimum. Mais comme ce besoin conduit à un nombre de tubes relativement important, la section totale du passage offert à l'air pourra s'en trouver beaucoup trop grande pour que la circulation interne s'y fasse à une vitesse suffisante: Ces tubes (**57**) pourront donc être aplatis entre leurs deux extrémités d'emmanchement (qui restent cylindriques) pour réduire ce passage à une section rectangulaire beaucoup plus faible, sans pour autant affecter la surface d'échange. Mais cet aplatissement impose de les orienter dans le sens radial de l'écoulement des gaz. Enfin, il convient de souligner le très grand intérêt du préchauffage-étuvage de la charge de bois à consommer, au moyen des tubes (**48**) parcourus par les gaz chauds produits qui tapissent la périphérie interne de la cuve (**47**): Alors que les gazogènes d'antan ne pouvaient utiliser que du bois parfaitement sec, cet agencement autorise l'emploi d'une large proportion de bois verts grossièrement effeuillés ou autres déchets végétaux humides, broyés menus et mélangés avec du bois sec en morceaux.
Selon l'autonomie souhaitée, diverses hauteurs de la cuve (**47**) peuvent-être adoptées.

L'ensemble est supporté par un socle robuste et de bonne stabilité (**68**), assez haut pour que l'accès à la porte (**46**) d'évacuation des cendres et scories soit aisé: Le turbo-moteur peut ainsi être placé très près du générateur, relié par des tuyautages (**64**) et (**65**) courts, minimisant la perte de charge de cette dérivation. Le groupe peut être fixe ou mobile, monté sur un véhicule adapté pour aller sur tout site où se trouve son combustible naturel en abondance: Notamment pour des travaux forestiers de débroussaillage avec élimination des bois rémanents, au moyen d'outils de coupe électriques opérant autour dans le rayon fixé par le fil et par déplacements successifs, d'un coût énergétique incitatif étant quasi-nul et sans le risque d'incendie encouru avec l'essence des engins à moteurs 2 temps, seuls utilisables à ce jour en forêt.

## Revendications

1. Procédé permettant de réaliser une économie de combustible pétrolier, en le remplaçant par l'énergie renouvelable de la bio-masse contenue dans du bois, au moyen d'un gazogène associé à une turbine à gaz: alimentée avec un combustible pétrolier liquide ou gazeux, du type à «2 étages de détente » avec « réchauffe » intermédiaire entre ces 2 détentes dans une Chambre de combustion secondaire **(15),** procédé **caractérisé en ce qu'**il utilise un gazogène à bois, afin de brûler dans ce turbo-moteur, le gaz combustible produit par ce gazogène alimentant les brûleurs **(16)** de la dite Chambre de combustion secondaire, avec de plus un apport de chaleur extérieur provenant de la combustion du bois dans ce générateur de gaz-combustible, cet apport de chaleur étant le cumul d'une chaleur récupérée dans ce générateur au moyen d'un échangeur Gaz/Air **(38)** qui y est incorporé, avec celle contenue dans le gaz combustible produit, utilisé en son état brut à la sortie, sans refroidissement mais grossièrement filtré, aspiré au gazogène et refoulé sous-pression convenable aux-dits brûleurs **(16)** au moyen d'un compresseur centrifuge **(36).**

2. Procédé selon la revendication 1, **caractérisé en ce que** le compresseur **(36)** aspirant le gaz-combustible produit par le gazogène pour le refouler aux brûleurs **(16)** est spécialement construit avec un corps en acier et un rotor de turbine en métal réfractaire issus d'un turbo-compresseur existant, afin de supporter sa haute-température, et mécaniquement ou électriquement entraîné en rotation inverse.

3. Procédé selon les revendications 1 et 2, **caractérisé en ce que**, quel que soit le turbo-moteur employé, le débit de son combustible pétrolier normal en appoint éventuel, ainsi que le débit du gaz de gazogène pour la réchauffe entre détentes sont, l'un et l'autre, contrôlés par un système de régulation automatique asservi à ses principaux paramètres de fonctionnement.

4. Procédé selon les revendications 1 à 3, **caractérisé en ce que** du combustible pétrolier liquide ou gazeux alimente la chambre de combustion principale, et **en ce que** la turbine à gaz est une mini-turbine à gaz conçue à cet effet.

5. Turbo-moteur pour la mise en oeuvre du procédé selon la revendication 1, **caractérisé en ce qu**'il est construit avec 2 turbo-compresseurs de suralimentation pour moteurs à combustion interne, différents de taille en proportion du volume spécifique du fluide en l'état où il traverse chacun, choisis parmi des modèles existants en fonction de leurs caractéristiques propres, la turbine du plus gros **(1)** étant la turbine « de puissance » **(2)** et son compresseur **(3)** le 1^{er} étage de compression de l'air aspiré à l'atmosphère, le plus petit **(9)** étant utilisé en « turbo-libre », non-assujetti mécaniquement, son compresseur **(12)** étant le 2^{ème} étage de compression et sa turbine **(10)** le 1^{er} étage de détente des gaz chauds et comprimés issus de la Chambre de combustion principale **(11),** dirigés après cette 1^{ère} détente à l'entrée de la turbine-motrice **(2)** après passage dans la Chambre de combustion secondaire **(15)** où ils subissent la « réchauffe » par les brûleurs **(16)** qui sont alimentés avec le gaz brut et chaud produit par le gazogène pour cette fonction, ce flux d'air travaillant étant d'abord passé dans un « récupérateur de chaleur » **(14)** placé dans le flux des gaz d'échappement de la turbine motrice **(2)** afin d'y récupérer le plus possible de leur chaleur résiduelle, puis dérivé au moyen d'une double chambre annulaire (**32**) et de conduits (**33**) vers un échangeur de chaleur extérieur Gaz/Air (**38**), placé dans le gazogène afin d'y récupérer de la chaleur provenant de la combustion du bois selon le procédé défini en revendication 1.

6. Turbo-moteur selon la revendication 5, **caractérisé en ce qu**'il utilise du GPL comme combustible pétrolier normal dont le débit en appoint, ainsi que celui du gaz de gazogène, est contrôlé par un système de régulation automatique asservi à ses principaux paramètres de fonctionnement.

7. Turbo-moteur selon l'une quelconque des revendications 5 et 6, **caractérisé en ce qu**'il utilise un Réducteur de vitesse approprié (**6**) pour entraîner un alternateur à la vitesse de rotation voulue pour délivrer du courant électrique à 50 ou 60 hertz.

8. Turbo-moteur selon la revendication 5, **caractérisé en ce qu**'il comporte un générateur de gaz de bois, alimentant le turbo-moteur en gaz-combustible et en chaleur récupérée selon le procédé défini par la revendication 1, **caractérisé en ce qu'**il est réalisé en sa partie interne selon un modèle classique, mais modifié extérieurement par adjonction d'une double-paroi (**39**) pour limiter la déperdition calorifique et comportant, ainsi que la cuve (**47**) contenant la charge de bois, des tubes échangeurs de chaleur (**48**) parcourus par le gaz chaud produit, afin de parfaire la dessiccation de ce bois et préchauffer l'air comburant avant d'aller au foyer **(37), caractérisé par** l'adaptation d'un échangeur de chaleur Gaz/Air **(38)** à sa base et autour du foyer **(37)** pour récupérer le plus possible la chaleur dégagée par la combustion du bois et à laquelle s'ajoutera celle contenue dans le gaz-combustible arrivant à l'état chaud et brut aux brûleurs de la chambre de combustion secondaire, conformément au procédé, lequel échangeur est un faisceau en couronnes de tubes d'acier **(57)** pouvant-être aplatis afin de réduire la section de passage et donner une bonne vitesse de circulation à l'air y circulant sans changer la surface d'échange, air dérivé provenant du turbo-moteur sous la pression correspondant au Rapport de pression qui y est réalisé et y retournant, surchauffé, au moyen d'un double-collecteur annulaire d'entrée/sortie d'Air **(60)** et tuyautages de liaison adéquats **(64)** et **(65)** avec celui **(32)** du turbo-moteur.

9. Groupe électrogène constitué d'un turbo-moteur selon l'une quelconque des revendications 4 à 6, entraînant un alternateur par l'intermédiaire d'un réducteur de vitesse approprié et alimenté par un gazogène à bois, **caractérisé en ce qu**'il est un générateur terrestre fixe ou mobile, en ce dernier cas adaptable sur un véhicule apte à le transporter sur tout site où se trouve son combustible naturel en abondance, notamment pour des travaux forestiers de débroussaillage avec élimination de bois rémanents, afin de permettre l'utilisation d'outils de coupe électriques, au lieu d'engins à essence.

## Claims

1. **Process permitting to realise one economy of petroleum fuel-combustible,** by replacing with renewable energie of the bio-masse, hold in the firewood, by the way of one gazogene associated with one gas-turbine feeded with a liquid or gas petroleum fuel, from the type « at 2 stages of expansion» with intermediate « re-heating » between these 2 expansions, into one of Secondary Chamber of combustion **(15),** process **characterised** within that is using one firewood gazogene, in order to burn in this turbo-motor, the gaseous combustible produced by this gazogene, feeding the burners **(16)** of the called Secondary Combustion chamber, with more, furnishing an external quantity of heat, that arise there from combustion of firewood into this gas-combustible generator, this furnishing of heat being the accumulation of one heat recuperated into this generator by mean of an heat-exchanger Gas/Air **(38)** incorporated on, with the one heat include in this produced gaseous combustible, employed in is rough state on is exit, without cooling but coarsely filtered, aspirated from the gazogene and refulling under proper pressure to the called burners **(16)** by means of centrifugal compressor **(36).**

2. **Process according to Claim 1, characterised** within the compressor **(36)** sucking the produced gaseous combustible from the gazogene in order to refulling it to burners **(16)** is specially built with a body in steel and one turbine-rotor in refractory-metal, in source of existing turbo-compressor, in order to support his high-temperature, involving in inverse-rotation, mechanically or electrically.

3. **Process according to Claims 1 et 2, characterised** within, whatever the turbo-motor used, the delivery of his normal petroleum fuel for eventual feeding, in the same way as gazogene-gas delivery, in order to re-heating between expansions, they are both adjusted by means of automatic regulation-system enslaved to principal parameters of working.

4. **Process according to Claims 1 à 3, characterised** within some liquid or gaseous petroleum fuel is feeding the Principal combustion Chamber, and within the gas-turbine is one mini-gas-turbine conceived for this effect.

5. **Turbo-motor to work up the Process according to Claim 1), characterised** within he his built with 2 turbo-compressors for surpercharging internal combustion engines, in different size proportionally of specific volume of crossing fluid in his state in each of them, selected among the existing models in dependence of its proper characteristics, the turbine of the more big **(1)** being the « power turbine » **(2)** and his compressor **(3),** the first compression-stage of air aspirated from atmosphere, the smaller **(9)** being used like « free-turbo », non-subject mechanically, his compressor **(12)** being the Second compression-stage, and his turbine **(10)** the first expansion-stage of pressured and hot gases issued from the Principal combustion chamber **(11),** directed after that first expansion to the entry of the « power turbine » **(2)** after crossing into the Secondary combustion chamber **(15)** where they are submit to re-heating by the burners **(16)** feeded by the rough and hot gas produced by the gazogene in this order, this working air-flow flux being before crossing into one « heat-recuperator » **(14)** situated inside the exhaust gas flow of « power-turbine» **(2)** in order to recover the most possible their residual heat, after turned from by means of the double annular chamber **(32)** and pipes **(33)** toward an external exchanger of heat Gas/Air **(38),** situated into the gazogene in order to recover the heat that arise of firewood combustion within the process defined in Claim **1)**.

6. **Turbo-motor according to Claim 5), characterised** within he his using some GPL like normal petroleum fuel whose the delivery for eventual feeding, in the same way as gazogene-gas delivery they are both adjusted by means of automatic regulation system enslaved to principal parameters of working.

7. **Turbo-motor according to any Claims 5) and 6), characterised** within it is apply to him a suitable Reducer of rotation-speed (**6**) in order to drive an alternator at rotation-speed required to delivery an electric-current to 50 or 60 hertz.

8. **Turbo-motor according to Claim 5), characterised** within he is to comprise an firewood gas generator to supply the turbo-motor with this gas-fuel and some heat recovered, according to the Process defined in Claim 1), **characterised** within he his built in his internal part conformably to classical model, but externally modified by adjunction of double-wall (**39**) in order to limit the heat loss and comprising, in the same way the tub **(47)** containing the charge of firewood, some exchanger-tubes **(48)** travelled by hot gas producted, in order to perfect the desiccation of this firewood and to get warm the air causing burning before to go on furnace (**37**), **characterised by** the adaptation of an heat-exchanger Gas/Air (**38**) in his basis and around the furnace (**37**) in order to recover more than possible of produced heat by the combustion of firewood and from which is joined that of the gas-fuel comming hot and rough to the burners of Secondary combustion chamber, according to the Proccess, which exchanger is one bundle in crown of steel pipes (**57**) to be able flatten in order to reduce the passing cross area and give to air crossing a favourable velocity without change of exchange area, this air turned from the turbo-motor under pressure in relation with the Pressure ratio realized and come back there, super-heated, by means of double Air annular-collector Entrance/Exit **(60)** and suitables connecting pipes (**64**) and (**65**) with the (**32**) of turbo-motor.

9. **Electric generating set composed by one turbo-motor according to any Claims 4 à 6,** driving an alternator through the medium of suitable reducer of rotation-velocity and feeding by one firewood-gazogene , **characterised** within he his one fixed or mobile terrestrial generator, in this last case adaptable on vehicle, proper to translate it, in all site where his natural fuel is in a great quantity, specialty for forest-works to clear of undergrowth, with elimination of remaining wood, in order to permit the use of electrical cutting tools in the place of gasoline engines.

## Patentansprüche

1. **Verfahren zur Einsparung von Ölbrennstoff,** welcher durch eine erneuerbare Energie aus der Holzbiomasse ersetzt wird, mittels eines Vergasers. Der Vergaser wird mit einer mit flüssigem oder gasartigem Ölbrennstoff versorgten Gasturbine gekuppelt, mit zwei Verbrennungsstufen mit Aufwärmung zwischen beiden Expansionen in einer sekundären Brennkammer **(15)**.Gekennzeichnet ist das Verfahren durch Benutzung eines Holzvergasers, zwecks Verbrennung im Turbo-Motor des Brenngases, das von jenem Vergaser produziert wird, der die Brenner (**16**) der besagten sekundären Brennkammer versorgt, mit zusätzlicher Zufuhr externer Hitze aus der Holzverbrennung in jenem Brenngasgenerator, diese Heissluftzufuhr entsteht aus dem Zusammenströmen der aus jenem Generator mittels eines eingebauten Gas/Lufttauschers **(38)** gewonnenen Heissluft mit jener Hitze, die im produzierten Gasbrennstoff enthalten ist, der als roher Abgas verwendet wird, ohne Auskühlung und nur grob filtriert, im Vergaser angesaugt und unter Druck den besagten Brennern **(16)** mittels eines zentrifugen Kompressors **(36)** vieder zugeführt wird.

2. **Verfahren nach Anspruch 1), dadurch** charakterisiert, dass der Kompressor, **(36),** welcher den vom Vergaser erzeugten Gasbrennstoffansaugt, um ihn den Brennern **(16)** wiederzuzufdhren, speziell aus Stahl gebaut, mit einem Turbinen-Rotor aus hochhitzbeständigem Metall, aus einem bereits existierenden Turbo-Kompressor, der mechanisch oder elektrisch in entgegengesetzter Rotation betrieben wird.

3. **Verfahren nach Anspruch 1 und 2, dadurch gekennzeichnet, dass** egal welcher Turbo-Motor benutzt wird, die Abflussmenge seines normalen Ölbrennstoffes in eventuellem Zuschuss, sowie auch die Abflussmenge des Gases aus dem Vergaser, während der Aufwärmung zwischen beiden Expansionen, durch ein System automatischer Regulierung kontrolliert werden, das den Hauptparametern des Funktionierens unterstellt ist.

4. **Verfahren nach Anspruch 1 und 3, dadurch gekennzeichnet, dass** flüssiger oder gasartiger Ölbrennstoff die Hauptbrennkammer versorgt, und dass die Gasturbine eine Mini-Gasturbine ist, eigens zu diesem Zweck konszipiert.

5. **Turbo-Motor zur Verwendung des Verfahrens nach Anspruch 1, dadurch** charakterisiert, dass er mit 2 Turbo-Kompressoren zur Überspeisung von Motoren mit interner Verbrennung, verhältnismässig zum spezifischen Volumen der Flüssigkeit, in dem Zustand wo sie ihn jeweils durchströmt, unter verschiedenen Modellen ausgesucht, auf Basis ihrer Eigenschaften, dieTurbine des grösseren **(1)** ist die Kraftturbine **(2)** und ihr Kompressor **(3)** die erste Stufe zum Pressen der Luft, die aus der Atmosphäre gesaugt wird, der kleinste (**9**) wird als freier Turbo benutzt, der mechanisch autonom ist, sein Kompressor (**12**) ist die zweite Verdichtungsstufe und seine Turbine **(10)** die erste Expansionsstufe der Heiss - und Pressluft aus der Hauptbrennkammer **(11),** welche nach jener ersten Expansion dem Zugang der treibenden Turbine (**2**) zugeleitet werden, nach dem Durchströmen der sekundären Verbrennungskammer **(15)** wo sie dank der Brenner « aufgewärmt » werden **(16),** welche versorgt werden von der puren Heissluft, eigen zu diesem Zweck vom Vergaser erzeugt, dieser Lufttrom passiert erst den Wärmetauscher **(14),** durchflutet von den Abgasen der Hauptturbine **(2),** damit aus ihnen so viel Wärme wie möglich gewonnen wird, dann wird er mittels einer doppelten Ringkammer **(32)** und Rohre **(33)** zu einem Gas/Luft Wärmetauscher **(38)** abgeleitet, welcher im Vergaser eingebaut ist um dorther Wärme aus der Holzverbrennung zu gewinnen, wie es im Verfahren 1) definiert wird.

6. **Turbo-motor nach Anspruch 5), dadurch gekennzeichnet, dass** er LPG als Ölbrennstoff verwendet, dessen Abflussmenge so wie auch die des Gases aus dem Vergaser, von einem automatischen Regulierungssystem kontrolliert wird, welches seinen Hauptfunktionierungsparametern unterstellt ist.

7. **Turbo-motor nach Anspruch 5) oder 6), dadurch gekennzeichnet, dass** er einen Zweckdienlichen Geschwindigkeitsminderer verwendet **(6)**, um einem Wechselstromgenerator mit der erwünschten Rotationsgeschwindigkeit anzutreiben, damit er 50 oder 60 Hertz-Strom erzeugt.

8. **Turbo-Motor nach Anspruch 5), dadurch gekennzeichnet, dass** er einen Holzgasgenerator enthält, der den Turbo-Motor mit Brenngas speist, so wie auch mit Wärme, die nach dem in Anspruch 1) definierten Verfahren gewonnen wird, charakterisiert durch seinen unteren Ausbau nach klassischem Modell, dennoch extern durch die Zulage einer Doppelwand **(39)** modifiziert, um den Wärmeverlust zu begrenzen, und ebensowohl wie Holzbehälter **(47)** mit Rohren zum Wärmeaustausch versehen **(48),** von der erzeugten Heissluft durchströmt, damit das Holz vollständing austrocknet und die Luft vorgeheitzt wird, bevor sie zur Herdstelle **(37)** gelangt, charakterisiert durch die Anpassung eines Gas/Luft Wärmetauschers **(38)** an der Basis und um die Herdstelle **(37),** um die grösstmöglichste Wärmemenge aus der Holzverbrennung zu gewinnen, zu welcher die Wärme des Brenngases aus den Brennern der zweiten Brennkammer hinzukommt entsprechend dem Verfahren, dessen Wärmetauscher ein kranzförmiges Rohraggregat **(57)** ist, diese Rohre können plattgedrückt werden, zur Reduzierung der Passieröffnung, damit die Luft mit gewünschter Geschwindigkeit Zirkuliert, ohne jedoch die Austauschfläche zu ändern, aus dem Turbo-Motor unter entsprechendem Druck, zurückgeführt, überheitzt, mittels eines doppelten Ringkollektors mit Ein-und Ausgang der Luft **(60)** und passender Verbindungsrohre **(64)** und **(65)** mit jenem **(32)** des Turbo-Motors.

9. **Stromaggregat bestehend aus einem Turbo-Motor nach Anspruch 4) bis 6),** einen Wechselstromgenerator betreibend, durch einen angepassten Geschwindigkeits-minderer, und gespeist von einem Holzvergaser, **dadurch gekennzeichnet dass** er als Generator am Boden befestigt ist, oder aber auch mobil sein kann, im letzten Fall einem Fahrzeug anpassbar, der ihn überall-hin transportieren kann, wo in Hülle und Fülle sein Naturbrennstoffzu finden ist, besonders bei Forstarbeiten mit Beseitigung von Altholz damit Schneidemaschinen mit Strom statt mit Benzin verwendet werden können.
